(19) **Europäisches Patentamt / European Patent Office / Office européen des brevets**

(11) **EP 4 473 841 B1**

(12) # EUROPEAN PATENT SPECIFICATION

(45) Date of publication and mention
of the grant of the patent:
**03.12.2025 Bulletin 2025/49**

(21) Application number: **24180666.0**

(22) Date of filing: **07.06.2024**

(51) International Patent Classification (IPC):
*A23K 10/00* (2016.01)    *A23K 20/142* (2016.01)
*A23K 50/00* (2016.01)    *A23K 50/75* (2016.01)
*A23K 10/38* (2016.01)    *A23K 20/147* (2016.01)

(52) Cooperative Patent Classification (CPC):
**A23K 10/00; A23K 10/38; A23K 20/142;
A23K 20/147; A23K 50/00; A23K 50/75**

(54) **PROCESS FOR PRODUCING AN ANIMAL FEED AND SAID ANIMAL FEED**

VERFAHREN ZUR HERSTELLUNG EINES TIERFUTTERS UND DIESES TIERFUTTER

PROCÉDÉ DE PRODUCTION D'UN ALIMENT POUR ANIMAUX ET LEDIT ALIMENT POUR
ANIMAUX

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **07.06.2023 LU 504450**

(43) Date of publication of application:
**11.12.2024 Bulletin 2024/50**

(73) Proprietor: **Traceless Materials GmbH
21079 Hamburg (DE)**

(72) Inventors:
• **Lamp, Anne
20457 Hamburg (DE)**
• **Eixenberger, Daniela
20457 Hamburg (DE)**
• **Cataldo, Alessandro
20457 Hamburg (DE)**

• **Volkmer, Pascal
20457 Hamburg (DE)**

(74) Representative: **Sonnenberg Harrison
Partnerschaft mbB
Herzogspitalstraße 10a
80331 München (DE)**

(56) References cited:
**WO-A1-2016/062855    SU-A1- 639 511
US-A1- 2011 033 576**

• HASSAN Z M ET AL: "The nutritional use of millet
grain for food and feed: a review",
AGRICULTURE & FOOD SECURITY, BIOMED
CENTRAL LTD, LONDON, UK, vol. 10, no. 1, 29
March 2021 (2021-03-29), pages 1 - 14,
XP021288768, DOI: 10.1186/S40066-020-00282-6

**Description**

BACKGROUND OF THE INVENTION

This application claims priority of the Luxembourg application LU504450, filed on 07 June 2023.

Technical Field

The present invention relates to an animal feed and to a process for producing an animal feed.

Background Art

Diets of mammals, such as monogastric animals, i.e., poultry, pigs, fish, and of polygastric animals, i.e., ruminants, are an important source of energy for the animals.

The source of the energy in the diets is supplied by dietary proteins. The dietary proteins provide essential amino acids, i.e., amino acids that are not synthesized by the animals. The essential amino acids are also termed indispensable amino acids.

Essential amino acids of the monogastric animals are, for example, histidine, isoleucine, leucine, lysine, methionine, phenylalanine, threonine, tryptophan, and valine. Lysine is especially an important essential amino acid for the monogastric animals, as disclosed by Larkins et al. in "Modification of maize-seed-protein quality", The American Journal of Clinical Nutrition, Volume 58, Issue 2, August 1993, Pages 264S-269S, https://doi.org/10.1093/ajcn/58.2.264S. Arginine is an essential amino acid for birds and fish more specifically.

The animal feeds of the monogastric animals further require a source of nitrogen provided by the amino acids that can be used for synthesizing the remaining amino acids, i.e. amino acids that are not essential amino acids but that are necessary for providing sufficient energy to the monogastric animals.

Two amino acids, cysteine and tyrosine, can be synthesized by the monogastric animals but only from the essential amino acids methionine and phenylalanine. The cysteine and the tyrosine are termed semi-indispensable or semi-essential for monogastric animals. Consequently, a dietary supply of the cysteine and the tyrosine spares the need for essential, i.e., indispensable amino acids.

The diets of the polygastric animals, i.e. the ruminants, must also comprise essential, i.e., indispensable amino acids. The ruminants are capable of synthesizing amino acids. Therefore, it is enough to provide animal feeds to the ruminants with sufficient nitrogen in form of amino acids.

Arginine is synthesized as part of the urea cycle in mammals. Glycine and serine may not be synthesized in sufficient quantities for mammals, such as for young mammals and, for example, for rapidly growing chicks. Glycine and serine are termed "conditionally indispensable" amino acids for the good functioning of the body of mammals, as disclosed by Miller in the article "Protein nutrition requirements of farmed livestock and dietary supply", https://www.fao.org/3/y5019e/y5019e06.htm, accessed on 28. April 2023.

Diets must meet basic physiological needs of the animals, e.g., the needs for energy, protein, fats, carbohydrates, vitamins, and minerals. The diets must further ensure optimal growth and productivity of the animals. Deficiencies can be compensated by feed supplements, such as vitamins, among others.

Nutritional feeding management should consider the digestive function, the age, the sex, the breed, the lactation status, and the gestational status, as well as the physical activity and the environmental conditions of the animals. Nutritionally related diseases in companion animals include both diseases of an excess of essential nutrients, and diseases of a deficiency of essential nutrients. The animal feeds and the nutritional feeding management can also influence the animal health if feeding results in an exposure to foodborne hazards, such as physical objects or chemicals, e.g. mycotoxins, allergens, or microbes, as disclosed by Torremorell in "Biosecurity of Animals", MSD Veterinary Manual, last review/revision in February 2021 and modified in November 2022, https://www.msdvetmanual.com/management-and-nutrition/management-and-nutrition-introduction/overview-of-management-and-nutrition-in-animals.

Animal studies, as disclosed by Miller in the article "Protein nutrition requirements of farmed livestock and dietary supply", https://www.fao.org/3/y5019e/y5019e06.htm, accessed on 28 April 2023, confirmed that protein deficiency reduces the immune status of the animals. Tsiagbe et al. in the article "Efficacy of Cysteine in Replacing Methionine in the Immune Responses of Broiler Chick", Poultry Science, Volume 66, Issue 7, 1987, pages 1138-1146, https://doi.org/10.3382/ps.0661138, showed the effect of supplemental methionine and cysteine, that are sulfur amino acids, on growth and immune responses of broiler chicks fed corn-soy diets. Tsiagbe et al. found that cysteine is important for the immune response of broiler chicks and that it can replace methionine to a large extent in this role for the immune response. Konashi et al. conducted experiments that are described in "Effects of dietary essential amino acid deficiencies on immunological variables in broiler chickens" . Br J Nutr. 2000 Apr;83(4):449-56. PMID: 10858703 for determining the effects of essential amino acid deficiencies on several immunological variables in male broiler chickens.

The response of the animals to an animal feed depends on complex interactions among the composition, the preparation, and the consequent nutritive value of the diets. Animal feeds are rated on productive energy and protein content of the animal feeds.

Rating the protein content of the animal feeds is performed by measuring the crude protein content. This is analyzed by determining the nitrogen (N) content in the animal feed, which is recalculated via a nitrogen-to-protein conversion factor, leading to the amount of crude protein present. Measuring the crude protein content in the animal feeds is of utmost importance for all animals.

Nevertheless, limiting amino acids are essential amino acids that are present in the lowest content in a protein relative to a reference protein.

Lysine or methionine and cysteine are first or second limiting amino acids for the monogastric animals. The nature of the limiting amino acids for the ruminants depends on the maturity state of the ruminants. Mature ruminants are generally capable of synthesizing amino acids in the rumen. Therefore, there are no limiting amino acids for the mature ruminants. Lactating ruminants and infant ruminants are, in contrast, not capable of synthesizing sufficient amino acids. Therefore, the amino acid composition of the animal feeds for the lactating ruminants and for the infant ruminants is all the more of great interest.

The limiting amino acids are used for further rating the animal feed by calculating a chemical score (CS) amino acid. The CS amino acid is an indicator of the quality of a protein and is evaluated by the following equation (1):

$$CS\ amino\ acid = \frac{content\ of\ an\ essential\ amino\ acid\ (\frac{mg}{g}of\ protein)}{ideal\ content\ of\ the\ essential\ amino\ acid\ (\frac{mg}{g}\ of\ protein)} \qquad (1)$$

wherein the ideal content of the essential amino acid is the content of the reference essential amino acid pattern.

The most limiting amino acid in the protein is reflected by the lowest CS amino acid.

Differences between animal species in their digestive system also affect the required concentration of protein in the animal feed. Carnivores have no ability to digest fibrous feed and even have a limited ability to digest starchy carbohydrates. Consequently, the diet of carnivores has to comprise more of both protein and fat, but the protein-to-energy ratio is not greatly increased compared with pigs and poultry. Fishes appear to have much higher protein needs than mammals. Aquaculture diets are a very important area in developing countries. The animal feeds of fishes comprise high content of proteins. This is not due to a greater need for protein by the fishes but a smaller need for energy, as disclosed by Miller in the article "Protein nutrition requirements of farmed livestock and dietary supply", https://www.fao.org/3/y5019e/y5019e06.htm, accessed on 28. April 2023.

Digestibility is defined as the difference between the amount of nitrogen (N) ingested and excreted, expressed as a proportion of N ingested.

Camp Montoro et al. describe in "High levels of standardized ileal digestible amino acids improve feed efficiency in slow-growing pigs at late grower-finisher stage" (DOI: 10.1111/jpn.13610) studies performed on slow- and fast-growing pigs to see the difference in levels of standardized ileal digestibility (SID) of amino acids (AA).

Ileal digestibility is used as an estimate for AA bioavailability in e.g. pig feed ingredients. These values can be denoted as standardized ileal digestibility, when the basal loss of AA is taken into account for calculation of the ileal digestibility, as defined by H.H. Stein et al., "Definition of apparent, true, and standardized ileal digestibility of amino acids in pigs", Livestock Science, Volume 109, Issues 1-3, 2007, pages 282-285, https://doi.org/10.1016/j.livsci.2007.01.019.

The studies of Camp Montoro show that an increase in SID of lysine per total of amino acids leads to a higher pig feed efficiency for slow-growing pigs. Thus, nutrient requirements may vary depending on a growth rate of animals for a same age of the animals.

Specific limiting amino acids or vitamins could be a problem for lactating adult females under the heavy stress of milk production, as disclosed by Van Soest et al. in "Nutritional Ecology of the Ruminant", Cornell University Press, 1994, https://doi.org/10.7591/9781501732355.

Miller discloses in "Protein nutrition requirements of farmed livestock and dietary supply" https://www.fao.org/3/y5019e/y5019e06.htm, accessed on 28. April 2023 that processing an animal feed for the monogastric animals under mild conditions, for example under low temperatures, results in a better digestibility of the animal feed, that is especially important for young mammals and fish.

Miller describes in particular that the mild conditions in presence of reducing sugars or sucrose result in a reaction of the epsilon-amino group of lysine with potential aldehyde groups of the reducing sugars or the sucrose to form early Maillard reaction products, such as fructosyl-lysine or formyl-lysine. The formation of the fructosyl-lysine or the formyl-lysine results in a loss of lysine. The reaction occurs further when proteins are even stored for substantially long times at 37 °C in the presence of the reducing sugars or the sucrose. The fructosyl-lysine and the formyl-lysine are absorbed by the monogastric animals, but they are not metabolized by the monogastric animals.

Animal feeds for the ruminants are not significantly influenced in their digestibility by heat treatment, especially when the composition of the amino acids of the animal feed is balanced to fulfill the required needed amino acids of the ruminants.

When the process does not comprise reducing sugars, process conditions of temperatures above 100 °C and high duration, for e.g. several hours, result in a loss of lysine, as disclosed by Carpenter and Booth, 1973.

These process conditions lead to cross-links being formed between the epsilon-amino group of lysine and the carboxyl group of aspartic acid and glutamic acid (or their amides) to form new peptide-like cross bonds (Hurrell et al., 1976). Further, under these process conditions, cystine loses hydrogen sulfide to form a dehydroalanine residue and a cysteine residue. The dehydroalanine residue and the cysteine residue recombine to form lanthionine, thereby creating a new C-S-C cross-link between peptide chains between the epsilon-amino group of lysine and between the carboxyl group of aspartic acid and glutamic acid.

Heating proteins in the absence of reducing sugars under milder conditions, for example, between 70 and 120°C, and for a duration of 20 minutes, results in a loss of sulfhydryl groups in the cysteine residues and an increase in disulfide bonds in the cysteine residues with little loss of the total cysteine, as disclosed in Opstvedt et al., "Heat-induced changes in sulfhydryl groups and disulfide bonds in fish protein and their effect on protein and amino acid digestibility in rainbow trout (Salmo gairdneri)". Journal of Agricultural and Food Chemistry. 1984 Jul;32(4):929-935. DOI: 10.1021/jf00124a056. The heating causes the formation of new S-S cross-links in the proteins and also causes the rearrangement of existing disulfide bonds during denaturation of proteins, reducing protein digestibility and amino acid digestibility, according to Opstvedt et al.

Dehydroalanine may also be formed by dehydration of serine. Under certain conditions, especially under alkaline pH, the epsilon-amino group of lysine reacts with dehydroalanine to form a lysinoalanine cross link. The lysinoalanine cross link reduces the digestibility of the protein and hence the availability of all amino acids, not just the amino acids directly involved, i.e. the lysine and the dehydroalanine.

It should be noted that the digestibility of an animal feed produced from a protein source containing prolamin may be linked to the content of hydrophobic amino acids in the animal feed. The hydrophobic amino acids may be alanine(Ala), isoleucine (Ile), leucine (Leu), methionine (Met), phenylalanine (Phe), valine (Val), proline (Pro), glycine (Gly), tryptophan (Trp), and tyrosine (Tyr). Gulati et al in "Heating Reduces Proso Millet Protein Digestibility via Formation of Hydrophobic Aggregates". J Agric Food Chem. 2017 Mar 8;65(9):1952-1959. doi: 10.1021/acs.jafc.6b05574. Epub 2017 Feb 23. PMID: 28198183 states that a reduction of the content of hydrophobic amino acids in the animal feed in view of the amino acid composition of the protein source results in an increase of the digestibility of the animal feed.

It should be noted that the digestibility of an animal feed produced from a protein source containing prolamin may further be defined by the pepsin non-digestible protein fraction in the animal feed. A value of the pepsin non-digestible protein fraction below 25% is a "normal" value, a value above 30% is a sign for too intense heat-treatment conducted on the protein source ("Die praktische Anwendung der Proteinbewertung für Wiederkäuer in der Rationsgestaltung für Milchrinder", M. Hoffmann, LKV Sachsen, 2011,https://www.bing.com/ck/a?!&&p=f61ff9abe184cc0fJmltdHM9MTcxNjc2O DAwMCZpZ3 3VpZD0wMGVhMzJjMS0wOTY4LTZkN GYtMzQ4OC0yNjQ2MDhiYTZjNDAmaW5za WQ9NTIx- NA&ptn=3&ver=2&hsh=3&fclid=00ea32c1-0968-6d4f-3488-264608ba6c40&psq=Praktische+Anwendung+Proteinbewertung%3b+2011&u). The pepsin digestibility assay is one of the most widely used assays to evaluate the quality of an animal feed and protein ingredients according to Bryan DDSL, Classen HL. In Vitro Methods of Assessing Protein Quality for Poultry. Animals. 2020; 10(4):551. https://doi.org/10.3390/ani10040551. Rumen degradable protein is also reduced with increasing heat treatment, according to Bryan DDSL et al. Bryan DDSL et al. further discloses that in addition, an amino acid loss can be triggered through heat processing of protein meal, most commonly by Maillard reactions.

Prolamins are defined by Osborne in The chemistry of the protein-bodies of the wheat kernel. Part I. The protein soluble in alcohol and its glutaminic acid content. In: American Journal of Physiology. 1905;13:35-44 as proteins that can be extracted in aqueous ethanol, in comparison to other proteins such as albumins that are extractable with water, globulins that are extractable with saline solution and glutelins that are substantially not extractable.

Current animal feeds comprise globulins and a protein source containing prolamin(s).

There are nutritional limitations in the current animal feeds because the globulins and the prolamins are devoid or deficient in one or more amino acids required for the animals. The prolamins in cereals are generally devoid of lysine, whereas the globulins in legumes are limited in the content of sulfur-containing amino acids, i.e., methionine and cysteine.

Various types of biotechnological approaches have been considered for improving the amino acid composition of the current animal feeds made of, for example, maize. One type of biotechnological approaches is producing, for example, transgenic maize plants, as disclosed by Holding et al. in "Recent advances in the study of prolamin storage protein organization and function", Frontiers in Plant Science, Plant Evolution and Development, June 2014, Volume 5, Article 276, https://doi.org/10.3389/fpls.2014.00276. One major drawback of the production of the transgenic maize plants is that a material imported into Europe containing more than 0.9% of any genetic modified organism (GMO) has to be GMO-labeled.

Overall, using maize grains as a major energy source, or corn gluten meal as a protein supplement, leads to a low contribution of lysine in the animal feed. Lysine has to be supplemented chemically in the animal feeds. A chemically supplemented lysine has a bioavailability more limited compared to a naturally supplemented lysine, i.e. lysine that is originally present in the animal feed, as disclosed on https://www.purinamills.com/dairy-feed/education/detail/using-lysine-in-cattle-feed"Many lysine sources degrade in the rumen, losing their effectiveness".

Current animal feed are also produced from millet, according to Gulati et al. in Journal of Agricultural and Food Chemistry, 2017, 65 (9), 1952-195, doi: 10.1021/acs.jafc.6b05574. According to Gulati et al., about 51% of proso millet protein is made up of hydrophobic amino acid residues. The hydrophobic amino acid residues might be responsible for low digestibility of the proso millet protein by animals.

Sorghum was also investigated to be used as a source for producing animal feeds, but sorghum has a property of poor digestibility of prolamins.

Zein and kafirin proteins are packaged into protein bodies that are inherently recalcitrant to digestion. The recalcitrance of the protein bodies results from the disulfide cross-linked nature of $\gamma$-prolamins. The $\gamma$-prolamins form a shell of relatively low surface area, i.e. the surface area that enzymes attack to digest the protein of the $\gamma$-prolamins is substantially low in view of the amount of $\gamma$-prolamin packaged, as disclosed by Holding et al. in "Recent advances in the study of prolamin storage protein organization and function", Frontiers in Plant Science, Plant Evolution and Development, June 2014, Volume 5, Article 276, https://doi.org/10.3389/fpls.2014.00276.

Mycotoxins are toxins produced naturally by fungi, for example by species of fungi of the *Aspergillus, Penicillium* or *Fusarium* genus. The species of fungi grow on different sorts of crops and foodstuffs, including cereals, and grow under any environmental conditions, as disclosed by https://www.who.int/news-room/fact-sheets/detail/mycotoxins. The growth of the species of fungi can take place before, after the harvesting, or during storing the crops. Most mycotoxins are chemically stable and survive food processing.

Mycotoxins cause a toxic response when the mycotoxins are ingested by animals above a certain concentration. The symptoms of the ingestion of the mycotoxin comprise reduced animal productivity, reduced body weight gain, reduced fertility and immune suppression, resulting in increased susceptibility to diseases and parasites to overt disease and death, as disclosed by Streit E et al., Current Situation of Mycotoxin Contamination and Co-occurrence in Animal Feed-Focus on Europe. Toxins. 2012; 4(10):788-809. https://doi.org/10.3390/toxins4100788.

The mycotoxins that have gained the most attention are aflatoxins (AF), deoxynivalenol (DON), zearalenone (ZEN), and ochratoxin A (OTA), because these mycotoxins are abundant in animal feeds originating from maize, are widely distributed, and have serious health effects on animals.

SU 639 511 Al further discloses treating a feedstuff, i.e., washing a feedstuff, with sodium bisulfite ($NaHSO_3$). $NaHSO_3$ is suitable for the removal of water soluble proteins, or proteins solubilized by breaking disulfide bridges, only. This further leads to a change of amino acid concentrations in the obtained animal feed. Since the solubility of hydrophobic prolamins is not similar in $NaHSO_3$ as in an organic solvent, such as an aqueous ethanol solution, a washing of a protein source containing prolamin with $NaHSO_3$ does not result in removing the same substances than conducting a washing of a protein source containing prolamin with a first organic solvent, followed by a washing with a second organic solvent. SU 639 511 A1 describes process for producing an animal feed from a protein source containing prolamin according to the preamble of claims 1, 4, 6, 10, and an animal feed from a protein source containing prolamin according to the preamble of claim 19.

$NaHSO_3$ is also known as being applied for steeping of corn, as disclosed in Yang, P. et al., (2005), Effect of Steeping with Sulfite Salts and Adjunct Acids on Corn Wet-Milling Yields and Starch Properties. Cereal Chemistry, 82: 420-424. https://doi.org/10.1094/CC-82-0420. The steeping of corn is the pre-processing condition of CGM happening at e.g., raw material suppliers. The effect of $NaHSO_3$ is mainly to soften the kernel of CGM, for further removing water-soluble proteins and y-zein being water soluble after treatment with $NaHSO_3$ or $SO_2$, for example.

Therefore, there is a need for a process capable of producing an animal feed with increased amounts of essential amino acids.

There is a need for a process capable of producing an animal feed with reduced mycotoxin contents.

## SUMMARY OF **THE INVENTION**

This problem is solved by the subject-matter of claim 1, 4, 6, 10, and 19. Further aspects and preferred embodiments of the present invention are defined in the process and use claims as well as in the dependent claims and result from the following description, the appended examples and especially the appended further patent claims.

An aspect of a process for producing an animal feed from a protein source containing prolamin is taught in this disclosure. The process comprises a first washing of the protein source containing prolamin followed by at least a second washing of the solid phase obtained from the first washing, thereby obtaining again a solid phase as the animal feed and at least two liquid phases. Parameters of washing are set such that the at least two liquid phases in sum yield at least 22% of initial glutamic acid, at least 22% of initial proline, at most 60% of initial lysine, and at least 20% of initial mycotoxins.

The term "initial" refers to the content in the protein source containing prolamin.

The term "at least 22% of initial glutamic acid" means "at least 22 % in respect to the content of glutamic acid of the protein source containing prolamin".

The first washing enables to remove most of the initial mycotoxins from the protein source containing prolamin by extracting most of the initial mycotoxins (AF, DON, ZEA, OXA) in the first liquid phase, resulting in a concentration of mycotoxins in the animal feed lower than the overall concentration of mycotoxins of the first liquid phase and the second liquid phase(s).

The extraction of the initial protein with low relative lysine content (based on total protein) into the second liquid phase(s) results in obtaining the animal feed with higher relative lysine content (based on total protein) than the protein source containing prolamin.

It is to be noted that not only the second washing can be foreseen as subsequent washings, i.e., a cascade system of washings, but the first washing as well may comprise subsequent washing.

Still, it is to be noted that it is essential to use different organic solvents or solvent/water mixtures.

In one aspect, the at least two liquid phases comprise from 22% to 70% of initial glutamic acid, from 22% to 75% of initial proline, from 10% to 60% of initial lysine, and from 20% to 90% of initial mycotoxins, if the initial concentration of mycotoxins is at least above 200 µg/kg.

In one aspect, the at least two liquid phases comprise 22% to 24% of initial glutamic acid, from 22% to 30% of initial proline, from 11% to 15% of initial lysine and from 41% to 50% of initial mycotoxins, where initial means protein source containing prolamin.

A process for producing an animal feed from a protein source containing prolamin, comprising the steps of washing the protein source containing prolamin with a first organic solvent to obtain a first solid phase and a first liquid phase, removing prolamin by washing the first solid phase with a second organic solvent to obtain a second solid phase and at least one second liquid phase;, the second solid phase being obtained as the animal feed, wherein the animal feed comprises glutamic acid at a concentration as compared to the protein source containing prolamin decreased by at least 22%, proline at a concentration as compared to the protein source containing prolamin decreased by at least 22%, mycotoxins at a concentration as compared to the protein source containing prolamin decreased by at least 20%, and lysine at a concentration as compared to the protein source containing prolamin increased by at least 40%. The animal feed contains at most 50% of initial mycotoxins, in case of severe mycotoxin load.

The washing of the protein source containing prolamin with the first organic solvent enables to reduce the amount of the mycotoxins. The washing of the first solid phase with the second organic solvent enables to remove proteins with low lysine content.

Therefore the animal feed produced by the process has a reduced amount of mycotoxins and additionally a higher amount of lysine compared to the protein source containing prolamin.

The animal feed comprises at least 4 % increased amount of sulfur-containing amino acids and at least 40 % increased lysine content compared to the initial raw material, i.e., the protein source containing prolamin. Furthermore, the animal feed comprises at most 60 mg/g dry matter of fatty acids, including at most 9 mg/g dry matter of saturated fatty acids; and the amount of mycotoxin is reduced by at least 20 %. The process further enables increasing the content of arginine by 30 % compared to the protein source containing prolamin. The content of glycine in the animal feed produced by the process of the present invention is also more than doubled compared to the content of glycine in an animal feed produced in a classical wet-milling process, such as described by Kent et al., Chapter 18 - Wet Milling: The Basis for Corn Biorefineries, Corn (Third Edition), AACC International Press, 2019, pages 501-535, https://doi.org/10.1016/B978-0-12-811971-6.00018-8.

The animal feed of the present invention comprises higher methionine and cysteine content, such as 3 g per 16 g N in comparison to the animal feed of the prior art, as disclosed by the article "Protein nutrition requirements of farmed livestock and dietary supply", https://www.fao.org/3/y5019e/y5019e06.htm, accessed on 28. April 2023, comprising about 2.8 g per 16 g N. The animal feed of the present invention further comprises a higher lysine content, of 2.4 g per 16 g N compared to 1.2 g per 19 g N. In one aspect, the animal feed contains <0,1 g sugar per 100 g.

In another aspect, a process for producing an animal feed from a protein source containing prolamin, comprising the steps of washing the protein source containing prolamin with a first organic solvent to obtain a first solid phase and a first liquid phase, removing prolamin by washing the first solid phase with a second organic solvent to obtain a second solid phase and a second liquid phase, until the second solid phase is obtained as the animal feed, wherein the animal feed comprises a content of glutamic acid lower than the overall amount of glutamic acid of the first liquid phase and the second liquid phase(s), a content of proline lower than the overall amount of proline of the first liquid phase and the second liquid phase(s), a content of lysine higher than the overall amount of lysine of the first liquid phase and the second liquid phase(s) and an amount of mycotoxins lower than the overall amount of mycotoxins of the protein source containing prolamin.

It is assumed that there was no major heat treatment interfering with the digestibility of the animal feed based on a pepsin-nondigestible protein value being below 25%.

It is assumed that the animal feed has an improved digestibility as parts of hydrophobic amino acids are removed out of the animal feed. Additionally, no significant heat treatment is conducted during the present process that would result in reducing the digestibility.

The "overall amount of glutamic acid of the first liquid phase and the second liquid phase(s)" refers to a sum of a first fraction of glutamic acid from the first liquid phase and a second fraction of glutamic acid from the second liquid phase.

It is intended to have substantially no glutamic acid nor other amino acids in the first liquid phase. It is intended to obtain an amino acid content in the second liquid phase and in the second solid phase to be the same amount as the amino acid content in the protein source containing prolamin.

It is to be noted that conducting the step of washing the first solid phase with a second organic solvent to obtain a second solid phase and a second liquid phase, until the second solid phase is obtained as the animal feed has been obtained by intense research and is a motivated choice to obtain an improved animal feed, and in particular to obtain an animal feed with improved digestibility.

The inventors have indeed conducted washing of the first solid phase with the second organic solvent to obtain a second solid phase and a second liquid phase, until the second solid phase is obtained as the animal feed, so that obtaining the specific content of amino acid claim.

Though washing is a well-known technique in the feedstuff production technical domain, there was prior to the present invention a prejudice against conducting more than one washing, for environmental and economic reasons, as using more solvent implies recycling the solvent in a proper and clean way, which is time and cost consuming. The process claimed provides for a unique solution with highly specific indication that from the overall contents of the protein source containing a prolamin is obtained that has less than half of initial the content of glutamic as the content of glutamic acid is defined to lower than the overall amount of glutamic acid of the first liquid phase and the second liquid phase(s). In other words, more than half is washed out. Concurrently a content of proline is also lower than the overall amount of proline of the first liquid phase and the second liquid phase(s). In other words, more than half is washed out. Further concurrently, and against expectations the process needs to be adjusted such that a content of lysine is higher than the overall amount of lysine of the first liquid phase and the second liquid phase(s), while the amount of mycotoxins needs to be lower than the overall amount of mycotoxins of the protein source containing prolamin. There is no hint at providing multistage washing and the expectation of the person skilled in the art would indeed be that all components be constantly washed out and their content reduced. In full contrast thereto the invention provides for reducing the concentrations of unwanted matter while increasing the content in proline. In other words, the inventive process is very specific in that it uses two different washing steps, and only by combining two different washing steps it is possible to reduce the generally unwanted components and to select among the proteins the specific ones that are advantageous for animal feed while reducing the ones that are more difficult to digest, i.e. having more complex folding configurations no disclosure.

In another aspect, a process for producing an animal feed from a protein source containing prolamin, comprising the steps of washing the protein source containing prolamin with a first organic solvent to obtain a first solid phase and a first liquid phase, removing prolamin by washing the first solid phase with a second organic solvent to obtain a second solid phase and a second liquid phase, until the second solid phase is obtained as the animal feed, wherein the liquid phases together comprise at least 120 mg/g of glutamic acid, at least 40 mg/g of proline, at most 7 mg/g of lysine, and at least 400 $\mu$g/kg mycotoxins is provided.

In one aspect, the step of washing the protein source containing prolamin with the first organic solvent is performed until the content of mycotoxins is less than 500 $\mu$g/kg in the first solid phase, in particular the animal feed comprises 90 $\mu$g/kg dry matter of mycotoxins, including 40 $\mu$g/kg dry matter of Deoxynivalenol and 40 $\mu$g/kg dry matter of Zearalenone.

In one further aspect, the step of extracting prolamin from and washing the first solid phase with a second organic solvent is performed using parameters and/ or cascaded multiple runs until the content of prolamin is less than 60% of the initial prolamin content, in particular the animal feed comprises 500 mg/g dry matter of proteins, including 110 mg/g of glutamic acid, 37 mg/g of proline and at least 10 mg/g of lysine.

In one aspect, the first organic solvent comprises at least 90 % by weight of ethanol and the washing is conducted so as to reduce the mycotoxin content by at least 10%, in particular during at least half an hour and at a temperature of at least 20°C, in particular three hours at 30°C.

In a further aspect, the second organic solvent is a water/ethanol solution comprising at most 95 wt% of ethanol. In a further aspect, the second organic solvent is a water/ethanol solution comprising at least 60 % by weight of ethanol, preferably the second organic solvent comprises between 60 % by weight and 95 % by weight of ethanol, preferably 70 % by weight of ethanol, more preferably 65 % by weight of ethanol. The washing is conducted during at least half an hour, preferably one hour, and at a temperature of at least 50°C.

In a further aspect, the process for producing the animal feed is advantageously not heated above 100°C, so that no new disulfide-bonds are introduced in the proteins according to the processing conditions. Catalyzed reactions, such as unwanted reactions, Maillard reactions, due to high temperatures are also prevented, preventing a reduction of the digestibility of the animal feed.

An animal feed from a protein source containing prolamin is further taught in this disclosure. The animal feed comprises at least 450 mg/g dry matter of proteins, including at most 130 mg/g of glutamic acid, at most 40 mg/g of proline, at least 7 mg/g of lysine, and at most 15000 $\mu$g/kg dry matter of mycotoxins.

The animal feed comprises at most 80% of glutamic acid in respect to the protein source containing prolamin, at most 70% of proline in respect to the protein source containing prolamin, at least 40% of lysine in respect to the protein source containing prolamin. At least 20% of mycotoxins are reduced in respect to the protein source containing prolamin.

In one aspect, the protein fraction of the at least two liquid phases together comprise at least 150 mg/g of glutamic acid, at least 60 mg/g of proline, and at least 250 $\mu$g/kg of mycotoxin, but at most 7 mg/g of lysine.

In one further aspect, the protein fraction in the animal feed comprises a concentration of glutamic acid of at most 120 mg/g, a concentration of proline of at most 40 mg/g, a concentration of lysine of at least 7 mg/g. In this aspect, the animal feed contains a concentration of mycotoxins of at most 90 $\mu$g/kg mycotoxins.

The animal feed of the invention is, in one aspect, produced under acidic conditions, for example at pH of at most 7.0 and not under alkaline pH, thereby reducing the risks of a formation of additional cross-links in the animal feed, such as lysinoalanine cross-links.

The protein fraction of the animal feed comprises advantageously at least 5% increased amount of sulfur-containing amino acids and at least 50% increased lysine content compared to the initial raw material. Furthermore, the animal feed comprises at most 60 mg/g dry matter of fatty acids, including at most 9 mg/g dry matter of saturated fatty acids; and the mycotoxin content is reduced by at least 20%.

In a further aspect, the animal feed comprises 25 $\mu$g/kg dry matter of mycotoxin. The mycotoxin content is indicated as the sum of Deoxynivalenol, Zearalenone, Aflatoxins and Ochratoxin A.

BRIEF DESCRIPTION OF THE DRAWINGS

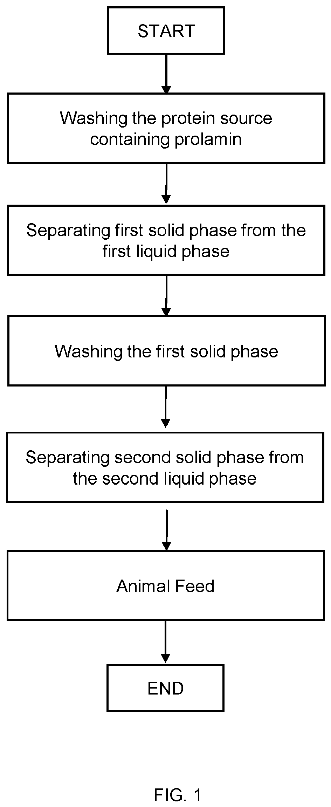

Fig. 1 illustrates a process scheme of a process for the production of an animal feed according to an embodiment of the present invention.

DETAILED DESCRIPTION

Fig. 1 shows a process scheme of a process for the production of an animal feed according to an embodiment of the present invention.

Process

The process comprises providing a protein source containing prolamin, such as corn gluten meal. The protein source containing prolamin comprises glutamic acid, proline, lysine and mycotoxins, termed as initial glutamic acid, initial proline, initial lysine and initial mycotoxins.

The process comprises a washing, i.e. a first washing, of the protein source containing prolamin.

The first washing is, in one example, with a first solvent, preferably a first organic solvent.

The first washing is, in another example, with a supercritical gas, preferably supercritical carbon dioxide ($CO_2$).

The first washing, i.e. the washing with the first organic solvent, enables to obtain a first solid phase and a first liquid phase. The first washing is conducted for at least 15 minutes, preferably for one hour, at room temperature.

The first solid phase comprises, for example, substantially carbohydrates and substantially proteins and a reduced content of mycotoxins as compared to the protein source containing prolamin.

The first liquid phase comprises, for example, fatty acids, pigments, polyphenols and mycotoxins. The mycotoxins are, for example, Deoxynivalenol, Zearalenone, Aflatoxin and Ochratoxin A. The fatty acids are saturated and unsaturated acids. The saturated fatty acids are, for example, palmitic acid. The unsaturated fatty acids are, for example, oleic and linoleic acid.

An advantage of the first washing is that at least 40% of the initial Deoxynivalenol concentration is removed from the protein source containing prolamin.

In one example, the inventors were surprisingly able to reduce the initial Deoxynivalenol concentration by 50%.

Another advantage of the first washing is that at least 20% of the initial Zearalenone concentration is removed from the protein source containing prolamin.

In a further example, the inventors were able to reduce the initial Zearalenone concentration by 72%.

The first liquid phase is, for example, further processed for recovering the first organic solvent from the first liquid phase. In one example, the first liquid phase is recovered by evaporation for better recycling the first organic solvent from the first liquid phase. The process for recovering the first organic solvent can be conducted in a combined distillation and dehydration system for removing impurities from the first solvent.

The first organic solvent comprises, for example, ethanol. The first organic solvent comprises at least 90 % by weight of ethanol, preferably at least 95 % by weight of ethanol, more preferably 98 % by weight of ethanol.

The first washing, i.e. the washing of the protein source containing prolamin with the first organic solvent, is performed, for example, until the content of mycotoxins is less than 600 $\mu$g/kg in the first solid phase.

The first washing is performed, i.e., conducted during at least half an hour and at a temperature of at least 20°C, preferably the first washing is conducted during two hours at a temperature of 40 °C.

The process further comprises removing prolamin by washing the first solid phase, i.e., removing prolamin from the first solid phase, with a second organic solvent to obtain a second solid phase and a second liquid phase, until the second solid phase is obtained as the animal feed.

The washing of the first solid phase, i.e. the second washing, with the second organic solvent, enables removing proteins with low relative concentration (based on total protein) of lysine from the second solid phase in the second liquid phase.

The second organic solvent comprises, in one example, ethanol or isopropanol.

The second organic solvent is, in another example, a water-ethanol solution, or a water-isopropanol solution.

In a further example, the second solvent 30 comprises at least 42% by weight of ethanol and 58% by weight of water, preferably 52% by weight of ethanol and 48% by weight of water, most preferably 60% by weight of ethanol and 40% by weight of water.

The second washing is conducted during at least half an hour and at a temperature of at least 50°C, preferably the first washing is conducted during one hour at a temperature of 70 °C.

In one example the second liquid phase is applied counter currently in several washing steps, to further increase the yield in prolamin extraction.

In another example, the second liquid phase is processed for recovering the second organic solvent.

The removal of prolamin by washing the first solid phase with the second organic solvent is followed, for example, by washing the second solid phase to obtain a third solid phase. The process comprises, for example, successive washings of successive obtained solid phases for improving the digestibility and the formulation of the animal feed, preferably the process comprises a first washing and a second washing, more preferably the process comprises a first washing, a second washing, wherein the second washing comprises two successive washings.

In one example, the washings are performed, i.e. conducted, until the content of prolamin in the animal feed is less than 60% of the initial prolamin amount.

In another example, the washings are performed in a countercurrent operation.

The process further comprises separating the second solid phase from the second liquid phase in a separator, such as a Büchner filter.

The process further comprises, for example, drying the second solid phase to obtain the animal feed.

The drying is, for example, at a temperature between 30°C and 80°C, preferably at a temperature between 50°C and 100°C, more preferably at a temperature between 60°C and 80°C. The drying enables to achieve a dry matter of the animal feed of at least 85%, preferably 88%, more preferably 90%.

The drying is conducted, in one example, in a vacuum dryer.

The first liquid phase and the second liquid phase

**In** one further example, the first liquid phase and the second liquid phase comprise at least 22% of initial glutamic acid, at least 22% of initial proline, at most 60% of initial lysine, and at least 20% of initial mycotoxins.

The formulation of "the first liquid phase and the second liquid phase comprise" should be understood as "the sum of the first liquid phase and the second liquid phase comprise", "the liquid phases together comprise", "the first liquid phase and the second liquid phase comprise in sum".

In a further example, the first liquid phase and the second liquid phase comprise from 22% to 75% of initial glutamic acid, from 22% to 70% of initial proline, from 10% to 60% of initial lysine; and from 20% to 90% of initial mycotoxins, if the initial concentration of mycotoxins is at least above 200 $\mu$g/kg.

In a further example, the first liquid phase and the second liquid phase comprise at least 140 mg/g of glutamic acid, at least 60 mg/g of proline, and at least 20% of the initial amount of mycotoxin, but at most 8 mg/g of lysine.

In a further example, the first liquid phase and the second liquid phase comprise at least 150 mg/g of glutamic acid, at least 65 mg/g of proline, and at least 30% of the initial amount of mycotoxins, but at most 7 mg/g of lysine.

In another example, the first liquid phase and the second liquid phase comprise at least 120 mg/g of glutamic acid, at least 40 mg/g of proline, at most 7 mg/g of lysine, and at least 400 $\mu$g/kg of initial mycotoxins.

Animal feed

The animal feed comprises, in one example, glutamic acid at a concentration as compared to the protein source containing prolamin decreased by at least 22%, proline at a concentration as compared to the protein source containing prolamin decreased by at least 22%, mycotoxins at a concentration as compared to the protein source containing prolamin decreased by at least 20%, and lysine at a concentration as compared to the protein source containing prolamin increased by at least 40%.

The animal feed comprises, in one example, a content of glutamic acid lower than the overall amount of glutamic acid of the first liquid phase and the second liquid phase(s), a content of proline lower than the overall amount of proline of the first liquid phase and the second liquid phase(s), a content of lysine higher than the overall amount of lysine of the first liquid phase and the second liquid phase(s), and an amount of mycotoxins lower than the overall amount of mycotoxins of the protein source containing prolamin.

In one example, the first liquid phase is void of glutamic acid and/or proline and/or lysin. The second liquid phase comprises the overall amount of glutamic acid and/or the overall amount of proline and/or the overall amount of lysin.

In one example, the amino acid content in the second liquid phase and the second solid phase is substantially the same amount amino acid as in the protein source containing prolamin.

The animal feed comprises proteins, for example 450 mg/g dry matter of proteins, in a further example 500 mg/g dry matter of proteins, the proteins including glutamic acid, proline, and lysine.

The animal feed comprises, for example, at most 160 mg/g of glutamic acid, preferably at most 130 mg/g of glutamic acid, preferably 120 mg/g of glutamic acid.

The animal feed comprises, in a further example, at most 100 mg/g of proline, at most 80 mg/g of proline, preferably 60 mg/g of proline, more preferably 40 mg/g of proline.

The animal feed comprises, in a further example, at least 5 mg/g lysine, preferably at least 7 mg/g, more preferably at least 10 mg/g of lysine, preferably 15 mg/g dry matter of lysine.

The animal feed comprises a concentration of mycotoxins of at most 400 μg/kg in one example.

The animal feed comprises at most 15000 μg/kg dry matter of mycotoxins in another example, the mycotoxins including 12000μg/kg dry matter of Deoxynivalenol and 3000 μg/kg dry matter of Zearalenone; preferably at most 10000 μg/kg dry matter of mycotoxin.

The animal feed obtained according to the process of the invention was found to present surprising digestibility properties.

The amino acid composition of the animal feed was improved in terms of absolute lysine content. The amino acid composition of the animal feed comprises, for example, an absolute lysine content of at least 2.4 g per 16 g N and an improved sulfur amino acid content of at least 3.0 g per 16 g N.

The animal feed further comprises a high content of carbohydrates and a high protein content and a low content of fatty acids, as shown on the table below, in comparison to corn gluten meal (CGM). The values for the CGM are described by D.D. Loy et al. in "Nutritional Properties and Feeding Value of Corn and Its Coproducts", https://doi.org/10.1016/B978-0-12-811971-6.00023-1. The process disclosed by D.D. Loy et al. for producing the CGM comprised the conventional steps of wet milling of maize kernels.

| | Carbohydrate [g/g dry matter] | Fatty acids [g/g dry matter] | Protein [g/g dry matter] | Ash [g/g dry matter] | Calorific value [kcal/100g dry matter] |
|---|---|---|---|---|---|
| CGM | 0.17-0.19 | 0.14-0.15 | 0.62 | 0.04-0.08 | 448-460 |
| Animal Feed | 0.36-0.45 | 0.02-0.06 | 0.46-0.52 | 0.06-0.07 | 397-411 |

The table shows that the process of the present invention enables to obtain an animal feed with an increased amount of carbohydrates relative to commercial corn gluten meal (CGM) and a decreased content of fatty acids, but a relatively high content of protein maintained relative to CGM.

The animal feed of the present invention is improved compared to CGM, as it comprises higher contents of ileal amino acids, i.e. lysine, threonine, methionine, tryptophan and isoleucine.

The animal feed of the present invention comprises twice as much lysine [mg/g protein] compared to commercial corn gluten meal (CGM). In addition, the concentrations of the essential amino acids methionine and cysteine are increased in the animal feed by 5%.

In one example, the inventors achieved to produce an animal feed with 14% increased cysteine concentration at an identical methionine concentration.

This renders the animal feed of the present invention especially suitable for the diets of pigs and chickens. Indeed, the body of the pigs and of the chickens cannot produce lysine by itself. Therefore, lysine is an essential amino acid and a limiting factor for the pigs and the chickens and needs to be provided by an external source, such as from an animal feed.

The second washing, followed by the separating of the second solid phase from the second liquid phase, enables removing proteins with low lysine content from the second solid phase, leading to increasing the content of lysine in the second solid phase. The proteins with low lysine content have substantially no value for the animal growth. The removing of the proteins with low lysine content enables to obtain the animal feed with a significantly better amino acid composition and having a high protein content.

**In** the following, the invention is explained in more detail by means of selected examples.

The contents of the mycotoxins in the following examples were measured with a Liquid chromatography-mass spectrometry (LC-MS/MS). The contents of the fatty acids were measured according to the Deutsche Akkreditierungsstelle GmbH, ASU numbers of 17.00-4, the contents of protein (Nx6,25) were measured by ASU L 17.00-15. The contents of the amino acids were measured with a high-performance liquid chromatography coupled with a fluorescence detection (HPLC/FLD).

Commercial corn gluten meal (CGM) is used as a comparison relative to the animal feed.

Example 1:

A protein source containing prolamin of corn gluten meal was provided for Example 1. The corn gluten meal was washed for one hour at 25°C with a first organic solvent of 98% ethanol to obtain a first solid phase and in a first liquid phase.

The first solid phase was separated from the first liquid phase with a separator. The first solid phase was washed with a second organic solvent comprising water and ethanol. The first liquid phase was processed in a vacuum distillery system for regaining the ethanol. The second washing was conducted for one hour at a temperature of 60°C to obtain a second solid phase and a second liquid phase. The second solid phase was separated from the second liquid phase in a solid-liquid separator. The second solid phase was dried in a vacuum dryer at a temperature between 60°C and 80°C. The animal feed 40 has a surprisingly improved composition compared to the corn gluten meal, as illustrated in the table 1 below.

Table 1 - Content of mycotoxin for Example 1

|  | Deoxynivalenol [$\mu$g/kg] | Zearalenone [$\mu$g/kg] | Aflatoxin (Sum) [$\mu$g/kg] | Ochratoxin A [$\mu$g/kg] |
|---|---|---|---|---|
| CGM | 853 | 165.7 | <0.5 | <0.5 |
| Animal feed | 42.7 | 45.7 | <0.5 | <0.5 |

As can be seen on the table, the content of Deoxynivalenol in the animal feed of Example 1 is reduced to 49,94% and the content Zearalenone is reduced to 72,42%. This shows that the process of the invention enables to reduce the content of mycotoxin in the animal feed.

Table 2 - Energetic values of the animal feed of Example 1

|  | Calorific value (kcal/100g DM) | Crude protein (g/g DM) | Crude carbohydrates (g/g DM) | Crude fatty acids (g/g DM) | Ash (g/g DM) |
|---|---|---|---|---|---|
| CGM | 448 | 0.616 | 0.170 | 0.139 | 0.0750 |
| Animal feed | 397 | 0.462 | 0.453 | 0.0235 | 0.0615 |

|  | Saturated fatty acids [g/g DM] | Unsaturated fatty acids [g/g DM] | Sugars [g/g DM] | Na [g/100 g] |
|---|---|---|---|---|
| CGM | 0.0068 | 0.0450 | 0.5 | 0.00092 |
| Animal Feed | 0.00427 | 0.0192 | >0.001 | 0.00107 |

Dry matter was abbreviated to DM. Table 2 shows that the animal feed obtained by the process of the invention comprises a higher content of carbohydrates and a lower content of fats in addition the protein content is lowered by comparison to CGM.

Example 2

A protein source containing prolamin of corn gluten meal was provided for Example 2. The corn gluten meal was washed counter currently in three subsequent step with a first organic solvent, a second organic solvent and a third organic solvent made of water and ethanol at three different concentrations. The three successive washing steps were conducted for one hour at a temperature of 60°C to obtain the second solid phase and the second liquid phase. The second solid phase was separated from the second liquid phase in a solid-liquid separator. The second solid phase was dried in step in a vacuum dryer at a temperature between 60°C and 80°C. The obtained animal feed has a surprisingly improved composition compared to the corn gluten meal, as illustrated in the table 3 below.

Table 3 - Energetic values of the animal feed of Example 2

| | Calorific value (kcal/100g DM) | Crude protein (g/g DM) | Crude carbohydrates (g/g DM) | Crude fatty acids (g/g DM) | Ash (g/g DM) |
|---|---|---|---|---|---|
| CGM | 461 | 0.624 | 0.187 | 0.146 | 0.0447 |
| Animal feed | 411 | 0.520 | 0.358 | 0.0551 | 0.0670 |

| | Saturated fatty acids [g/g DM] | Unsaturated fatty acids [g/g DM] | Sugars [g/g DM] | Na [g/100 g] |
|---|---|---|---|---|
| CGM | 0.007 | 0.0450 | 0.5 | 0.00092 |
| Animal Feed | 0.008 | 0.0463 | >0.001 | 0.000176 |

As can be seen on Table 3, the animal feed of Example 2 comprises higher content of carbohydrates and a comparable content of fatty acids while the content of proteins is slightly lowered by comparison to corn gluten meal.

Table 4 - Relative amino acids required for different animals based on Miller in the article "Protein nutrition requirements of farmed livestock and dietary supply", https://www.fao.org/3/y5019e/y5019e06.htm, accessed on 28. April 2023.

| Relative Amin o acid requir e-ment | Pig | Chick | Rat | Salm onids | Trout | Com mon Carp | Tilapi a | Cat | Animal Feed |
|---|---|---|---|---|---|---|---|---|---|
| Lysine | 100 | 100 | 100 | 100 | 100 | 100 | 100 | 100 | 100 |
| Met+ Cys | 51 | 72 | 70 | 50 | 56 | 54 | 63 | 90 | 235 |
| Threo -nine | 64 | 67 | 60 | 42 | 44 | 68 | 73 | 90 | 188 |
| Valine | 74 | 77 | 85 | 46 | 67 | 63 | 55 | 80 | 256 |
| Leucine | 114 | 109 | 110 | 75 | 78 | 57 | 66 | <150 | 883 |
| Isoleu - cine | 57 | 67 | 70 | 42 | 50 | 44 | 61 | 65 | 224 |
| Phe+ Tyr | 114 | 105 | 110 | 110 | 100 | 114 | 108 | 130 | 609 |
| Trypt | 17 | 16 | 14 | 13 | 11 | 14 | 20 | 15 | 28 |
| Histidi -ne | 36 | 32 | 36 | 33 | 39 | 37 | 34 | 35 | 115 |
| Argini -ne | 40 | 105 | | 88 | 83 | 75 | 83 | 150 | 175 |
| Gly or Ser | | 65 | | | | | | | 66 |
| Proline | | 44 | | | | | | | 487 |
| Tauri ne | | | | | | | | 6 | |

Lysine is used as the reference amino acid in the comparative table above and all other amino acids are expressed as a ratio to lysine because lysine is the first limiting amino acid in most diets.

Met + Cys stands for methionine and cysteine, Phe + Tyr stands for phenylalanine and tyrosine, Trypt for Tryptophan, Gly or Ser for glycine or serine Table 4 shows the amino acid requirement of different animals compared to the amino acid composition of the animal feed 40. For all animals listed, requirements are met in terms of Met+Cys, Threonine, Valine, Leucine, Isoleucine, Phe + Tyr, as well as Histidine, Arginine and Proline.

Table 5 - Contents of the amino acids in the animal feed of Example 1.

| Relative amino acid requirement | Ideal amount for chicks (g/16 g N) | Ideal amount for young pigs (g/16 g N) | Animal feed (g/16 g N) | CGM (g/16 g N) |
|---|---|---|---|---|
| Lysine | 5.4 | 7 | 2.4 | 1.2 |
| Met + Cys | 4 | 3.6 | 3.0 | 2.8 |

Table 5 shows that the process of the present invention enables to obtain an improved animal feed that is closer to the requirements of lysine of pigs and chicks.

Table 6 - Amount of amino acids in CGM, Example 1 and Example 2

| | Content in CGM (g/kg) | Content in Example 1 (g/kg) | Content in Example 2 (g/kg) | Proportion compared to CGM in Example 1 (%) | Proportion compared to CGM in Example 2 (%) |
|---|---|---|---|---|---|
| Glutamic acid (g/kg) | 139 | 76 | 63 | 56 | 45 |
| Proline (g/kg) | 51 | 30 | 21 | 58 | 42 |
| Lysine(g/kg) | 16 | 10 | 14 | 63 | 87 |

As can be seen on Table 6 above, the content of hydrophobic amino acids, i.e., the proline, in the animal feed of Example 1 and Example 2. is reduced by comparison to the content in the prolamin source of CGM. It can therefore be concluded that the prolamins are moved during the process claimed as prolamins comprise a high amount of hydrophobic amino acids, as known in the prior art Xing, J.; Li, Z.; Zhang, W.; Wang, P. The Composition, Structure, and Functionalities of Prolamins from Highland Barley. Molecules 2023, 28, 5334. https://doi.org/10.3390/molecules28145334.

In the following Table 7, a summary of the pepsin undigestible protein, in other words the pepsin non-digestible protein fraction, of different animal feed of the present invention are provided below. The protein source, i.e., the raw material, is protein source comprising a prolamin containing biomass, not always originating from the same crop (raw material 1, 2 & 3).

Table 7 - Proportion of pepsin-undigestible protein in animal feed from different protein source.

| | Sample 1 (origin raw material: CGM) | Sample 2 (origin raw material: CGM) | Sample 3 (origin raw material: CGM) | Sample 4 (origin raw material: CGF) | Sample 5 (origin raw material: BSG) |
|---|---|---|---|---|---|
| Pepsin-undigestible protein [% of the crude protein] | 17.3 | 15.7 | 15.6 | | |

CGF stands for corn gluten feed, BSG for brewer spent grain.

Exemplary listings of the content of amino acids in the protein source and in the animal feed. Categorization of hydrophobic and hydrophilic amino acids is according to the respective side-chain of the amino acid (according to "Biochemie, Müller-Esterl", https://doi.org/ 10.1007/978-3-662-54851-6).

| Sample | Hydrophobic amino acids (Ala, Ile, Leu, Met, Phe, Val, Pro, Gly, Trp, Tyr) | Hydrophilic amino acids (Gln, Asn, His, Ser, Thr, Cys, Lys, Arg, Asp, Glu) | Hydrophobic-to-Hydrophilic amino acids ratio |
|---|---|---|---|
| Original raw material: CGM | 380 g/kg | 289.4 g/kg | 1.31 |
| Animal feed from CGM | 278.87 g/kg | 288.7 g/kg | 0.97 |

Table 8 - Relative amounts of amino acids

| Sample | Glutamic acid (min) | Proline (min) | Lysine (max) |
|---|---|---|---|
| Animal feed from DDGS | 4-9% | 1.5-3% | 0.3%-0.8% |
| Animal feed from BSG | 19% | 11% | 0.6% |
| Animal feed from Wheat starch by-products | 59% | 24% | 1,6% |

DDGS stands for Dried distillers grains with solubles.

The glutamic acid, proline and lysine contents rely on the actual amino acid composition of the respective prolamin removed. Therefore, removing the prolamin fraction from CGM leads to the following table:

Table 9 - Amount of amino acids in different products during the present process

|  | Glutamic acid | Proline | Lysine |
|---|---|---|---|
| Raw material (CGM) = protein source containing prolamin | 135 mg/g | 58 mg/g | 12 mg/g |
| Solids after ethanol washing (DCGM) = first solid phase | 135 mg/g | 58 mg/g | 12 mg/g |
| Extract (zein) = second liquid phase | 191 mg/g | 74 mg/g | 5 mg/g |
| Solid residue (animal feed) = second solid phase | 105 mg/g | 35 mg/g | 22 mg/g |
| Purified zein (commercial) | 205 mg/g | 66 mg/g | 1 mg/g |

In a case of a change of the prolamin-containing biomass, i.e., the protein source containing prolamin, to e.g. brewer spent grain, the respective prolamin (hordein) has different amino acid composition. Same conclusion applies for e.g., the wheat prolamin (gliadin). Thus, based on the applied raw material, i.e., protein source containing prolamin, the amino acid composition changes. Also based on the prolamin that is contained in the biomass, the percentage of e.g., glutamic acid removal will be different. Overall, prolamins are defined to be rich in glutamic acid and proline. Thus, as the prolamins are removed from the first solid residue, i.e., first solid phase, and solubilized in the second liquid phase, a lower concentration of glutamic acid and proline in the second solid phase, i.e., the animal feed, is observed.

Furthermore, prolamins are poor in lysine, thus when removing the lysine-poor fraction of proteins, called prolamins, from the first solid phase, a higher amount of lysine in the second solid phase is observed. The lysine-poor fraction (prolamins, by definition soluble in aqueous alcohols, such as the second liquid phase) is removed, thus the lysine-rich fraction is staying in the second solid phase, i.e. the animal feed.

Lysine is the most critical essential amino acid, especially in animal feed.

The conclusion in terms of mycotoxin removal is more general, as the concentration of mycotoxins in the animal feed does not relate to the protein source containing prolamin. The concentration of mycotoxins is dependent on the initial concentration of mycotoxins. The lower the concentration, the lower the removed amount. As some analyses for the CGM and the respective animal feed resulting after the production process were conducted, at least two mycotoxins at a time are reduced as shown in the table below, row one. The mycotoxin reduction is displayed in the following table:

|  | DON (Deoxynivaleol) | ZEA (Zearalenon) | AFL (Aflatoxins) | OXA (Ochratoxin A) |
|---|---|---|---|---|
| Reduction of mycotoxin in animal feed based on CGM | At least 30% | At least 20% | At least 40% | At least 15% |
| CGM (raw material) | 73 μg/kg | 142 μg/kg | n.d. | n.d. |
| First solid phase (ethanol washed CGM) | 38,5 μg/kg | 67 μg/kg | n.d. | n.d. |
| Second solid phase (animal feed) | 20 μg/kg | 21 μg/kg | n.d. | n.d. |

The mycotoxin removal is independent from the raw material used. Nevertheless, the levels of mycotoxins can deviate depending on the raw material used.

Table 10 - Composition throughout the process:

|  | Protein (% of dry matter) | Carbohydrates (% of dry matter) | Fat (% of dry matter) |  |
|---|---|---|---|---|
| Raw material | 50-70% | 6-18% | 5-13% |  |
| First liquid phase |  |  | Ca. 95% | + mycotoxins, pigments, potentially pesticides |
| First solid phase | 65-70% | 20-25% | 3-6% | Reduced level of myco-toxins, pigments, and po-tentially pesticides |
| Second liquid phase | 65-95% | 5-30% | 2-5% | Incl. prolamins |

(continued)

|  | Protein (% of dry matter) | Carbohydrates (% of dry matter) | Fat (% of dry matter) |  |
|---|---|---|---|---|
| Second solid phase (animal feed) | 45-60% | 35-45% | 1-5% | Excl. prolamins |

**Claims**

1. A process for producing an animal feed from a protein source containing prolamin, comprising the steps of:

   a first washing of the protein source containing prolamin with a first solvent,
   **characterized in that** the process further comprises
   at least a second washing with a second solvent, thereby obtaining a solid phase as the animal feed and at least two liquid phases, wherein
   the at least two liquid phases together comprise:

   at least 22% of initial glutamic acid;
   at least 22% of initial proline;
   at most 60% of initial lysine; and
   at least 20% of initial mycotoxins.

2. The process of claim 1, wherein the at least two liquid phases together comprise:

   from 22% to 70% of initial glutamic acid;
   from 22% to 75% of initial proline;
   from 10% to 60% of initial lysine; and
   from 20% to 90% of initial mycotoxins, if the initial concentration of mycotoxins is at least above 200 $\mu$g/kg.

3. The process of claim 1 or 2, wherein the at least two liquid phases together comprise:

   at least 90 mg/g, preferably at least 140 mg/g of glutamic acid;
   at least 30 mg/g of proline, and
   at least 20% of the initial amount of mycotoxin, but
   at most 16 mg/g, preferably at most 8 mg/g of lysine.

4. A process for producing an animal feed from a protein source containing prolamin, comprising the steps of:

   washing the protein source containing prolamin with a first organic solvent to obtain a first solid phase and a first liquid phase, **characterized in that** the process further comprises
   removing prolamin by washing the first solid phase with a second organic solvent to obtain a second solid phase and at least one second liquid phase;
   the second solid phase being obtained as the animal feed, wherein the animal feed comprises:

   glutamic acid at a concentration as compared to the protein source containing prolamin decreased by at least 22%,
   proline at a concentration as compared to the protein source containing prolamin decreased by at least 22%,
   mycotoxins at a concentration as compared to the protein source containing prolamin decreased by at least 20%, and
   lysine at a concentration as compared to the protein source containing prolamin increased by at least 40%.

5. The process of claim 4, wherein the at least two liquid phases together comprise:

   at least 150 mg/g of glutamic acid;
   at least 65 mg/g of proline, and

at least 30% of the initial amount of mycotoxin, but
at most 7 mg/g of lysine.

6. A process for producing an animal feed from a protein source containing prolamin, comprising the steps of:

washing the protein source containing prolamin with a first organic solvent to obtain a first solid phase and a first liquid phase, **characterized in that** the process further comprises
removing prolamin by washing the first solid phase with a second organic solvent to obtain a second solid phase and a second liquid phase, until the second solid phase is obtained as the animal feed, wherein the animal feed comprises:

a content of glutamic acid lower than the overall amount of glutamic acid of the first liquid phase and the second liquid phase(s);
a content of proline lower than the overall amount of proline of the first liquid phase and the second liquid phase(s);
a content of lysine higher than the overall amount of lysine of the first liquid phase and the second liquid phase(s); and
an amount of mycotoxins lower than the overall amount of mycotoxins of the protein source containing prolamin.

7. The process of claim 6, wherein the animal feed comprises:

a concentration of glutamic acid of at most 120 mg/g,
a concentration of proline of at most 40 mg/g,
a concentration of lysine of at least 7 mg/g, and
a concentration of mycotoxins of at most 400 $\mu$g/kg.

8. The process of claim 7, wherein the animal feed comprises:

a concentration of glutamic acid of at most 90 mg/g; and/or
a concentration of lysine of at least 16 mg/g of lysine.

9. The process of any one of the above claims, wherein the protein source containing prolamin is corn gluten meal (CGM) and/or brewer spent grain (BSG) and/or wheat starch by-products.

10. A process for producing an animal feed from a protein source containing prolamin, comprising the steps of:

washing the protein source containing prolamin with a first organic solvent to obtain a first solid phase and a first liquid phase, **characterized in that** the process further comprises
removing prolamin by washing the first solid phase with a second organic solvent to obtain a second solid phase and a second liquid phase, until the second solid phase is obtained as the animal feed, wherein the liquid phases together comprise:

at least 120 mg/g of glutamic acid,
at least 40 mg/g of proline,
at most 7 mg/g of lysine, and
at least 400 $\mu$g/kg mycotoxins.

11. The process of claim 10, wherein

the step of washing the protein source containing prolamin with the first organic solvent is performed until the content of mycotoxins is less than 600 $\mu$g/kg in the first solid phase,
in particular the animal feed comprises at most 15000 $\mu$g/kg dry matter of mycotoxins, including 12000 $\mu$g/kg dry matter of Deoxynivalenol and 3000 $\mu$g/kg dry matter of Zearalenone.

12. The process of claim 10 or 11, wherein

the step of removing prolamin by washing the first solid phase with a second organic solvent comprises at least more than two successive washings until the content of prolamin is less than 60% of the initial prolamin amount, in particular until the animal feed comprises:

> 450 mg/g dry matter of proteins, including
> 120 mg/g of glutamic acid,
> 40 mg/g of proline, and
> at least 10 mg/g of lysine.

13. The process of any one of claims 10 to 12, wherein the first organic solvent comprises at least 90 % by weight of ethanol, preferably at least 95 % by weight of ethanol, and/or
the first washing is conducted during at least half an hour and at a temperature of at least 20°C, preferably the first washing is conducted during two hours at a temperature of 40 °C.

14. The process of any one of claims 10 to 13, wherein the second organic solvent comprises at least 60 % by weight of ethanol, preferably at least 70 % by weight of ethanol, and/or
the second washing is conducted during at least half an hour and at a temperature of at least 50°C, preferably the first washing is conducted during one hour at a temperature of 60 °C.

15. The process of any of the above claims, wherein one of the washing of the protein source containing prolamin with the first organic solvent, the washing of the first solid phase with the second organic solvent, or a combination thereof, is conducted so as to reduce the mycotoxin content in the animal feed by at least 20% compared to the initial amount of mycotoxins.

16. The process of any of the above claims, wherein

> the second organic solvent is a water/ethanol solution comprising at least 60 % by weight of ethanol, and
> the removing of prolamin by washing the first solid phase is conducted until the animal feed comprises,
> at least one condition, preferably all of the below conditions:
>
> > at least 450 mg/g dry matter of proteins, including
> > at most 130 mg/g of glutamic acid,
> > at most 40 mg/g of proline,
> > at least 7 mg/g of lysine,
> > in particular the removing of prolamin by washing the first solid phase is conducted during at least half an hour and at a temperature of at least 50°C.

17. The process of any of the above claims, further comprising drying the animal feed at temperatures between 30°C and 80°C, preferably the drying comprises a vacuum drying step.

18. The process of any of the above claims, wherein
the removing of prolamin by washing the first solid phase with the second organic solvent is conducted by maintaining the dielectric constant $\varepsilon r$ between 30 and 42.

19. An animal feed from a protein source containing prolamin, **characterized in that** comprising:

> at least 450 mg/g dry matter of proteins, including
> at most 130 mg/g of glutamic acid,
> at most 40 mg/g of proline,
> at least 7 mg/g of lysine; and
> at most 15000 μg/kg dry matter of mycotoxins.

20. The animal feed of claim 19, comprising:

> 500 mg/g dry matter of proteins, including
> 120 mg/g of glutamic acid,
> 37 mg/g of proline, and
> at least 10 mg/g of lysine, preferably 15 mg/g dry matter of lysine.
> preferably at most 10000 μg/kg dry matter of mycotoxin.

**21.** The animal feed of claim 19 or 20, comprising:

   at most 160 mg/g of glutamic acid;
   at most 60 mg/g of proline; and
   at least 5 mg/g lysine.

**Patentansprüche**

**1.** Verfahren zur Herstellung eines Tierfutters aus einer Proteinquelle, die Prolamin enthält, umfassend die folgenden Schritte:
ein erstes Waschen der Proteinquelle, die Prolamin enthält, mit einem ersten Lösungsmittel, **dadurch gekennzeichnet, dass** das Verfahren ferner Folgendes umfasst:

mindestens ein zweites Waschen mit einem zweiten Lösungsmittel, wodurch eine feste Phase als das Tierfutter und mindestens zwei flüssige Phasen erhalten werden, wobei
die mindestens zwei flüssigen Phasen zusammen Folgendes umfassen:

   mindestens 22 % an anfänglicher Glutaminsäure;
   mindestens 22 % an anfänglichem Prolin;
   höchstens 60 % an anfänglichem Lysin; und
   mindestens 20 % an anfänglichen Mykotoxinen.

**2.** Verfahren nach Anspruch 1, bei welchem die mindestens zwei flüssigen Phasen zusammen Folgendes umfassen:

   von 22 % bis 70 % an anfänglicher Glutaminsäure;
   von 22 % bis 75 % an anfänglichem Prolin;
   von 10 % bis 60 % an anfänglichem Lysin; und
   von 20 % bis 90 % an anfänglichen Mykotoxinen, wenn die anfängliche Konzentration von Mykotoxinen mindestens über 200 $\mu$g/kg liegt.

**3.** Verfahren nach Anspruch 1 oder 2, bei welchem die mindestens zwei flüssigen Phasen zusammen Folgendes umfassen:

   mindestens 90 mg/g, vorzugsweise mindestens 140 mg/g Glutaminsäure;
   mindestens 30 mg/g Prolin, und
   mindestens 20 % der anfänglichen Menge an Mykotoxin, aber höchstens 16 mg/g, vorzugsweise höchstens 8 mg/g Lysin.

**4.** Verfahren zur Herstellung eines Tierfutters aus einer Proteinquelle, die Prolamin enthält, umfassend die folgenden Schritte:
Waschen der Proteinquelle, die Prolamin enthält, mit einem ersten organischen Lösungsmittel, um eine erste feste Phase und eine erste flüssige Phase zu erhalten, **dadurch gekennzeichnet, dass** das Verfahren ferner Folgendes umfasst:

Entfernen von Prolamin durch Waschen der ersten festen Phase mit einem zweiten organischen Lösungsmittel, um eine zweite feste Phase und mindestens eine zweite flüssige Phase zu erhalten;
wobei die zweite feste Phase als das Tierfutter erhalten wird, wobei das Tierfutter Folgendes umfasst:

   Glutaminsäure in einer Konzentration im Vergleich zu der Proteinquelle, die Prolamin enthält, die um mindestens 22 % verringert ist,
   Prolin in einer Konzentration im Vergleich zu der Proteinquelle, die Prolamin enthält, die um mindestens 22 % verringert ist,
   Mykotoxine in einer Konzentration im Vergleich zu der Proteinquelle, die Prolamin enthält, die um mindestens 20 % verringert ist, und
   Lysin in einer Konzentration im Vergleich zu der Proteinquelle, die Prolamin enthält, die um mindestens 40 % erhöht ist.

5. Verfahren nach Anspruch 4, bei welchem die mindestens zwei flüssigen Phasen zusammen Folgendes umfassen:

mindestens 150 mg/g Glutaminsäure;
mindestens 65 mg/g Prolin und
mindestens 30 % der anfänglichen Menge an Mykotoxin, aber höchstens 7 mg/g Lysin.

6. Verfahren zur Herstellung eines Tierfutters aus einer Proteinquelle, die Prolamin enthält, umfassend die folgenden Schritte:
Waschen der Proteinquelle, die Prolamin enthält, mit einem ersten organischen Lösungsmittel, um eine erste feste Phase und eine erste flüssige Phase zu erhalten, **dadurch gekennzeichnet, dass** das Verfahren ferner Folgendes umfasst:
Entfernen von Prolamin durch Waschen der ersten festen Phase mit einem zweiten organischen Lösungsmittel, um eine zweite feste Phase und eine zweite flüssige Phase zu erhalten, bis die zweite feste Phase als das Tierfutter erhalten wird, wobei das Tierfutter Folgendes umfasst:

einen Gehalt an Glutaminsäure, der niedriger als die Gesamtmenge an Glutaminsäure der ersten flüssigen Phase und der zweiten flüssigen Phase(n) ist;
einen Gehalt an Prolin, der niedriger als die Gesamtmenge an Prolin der ersten flüssigen Phase und der zweiten flüssigen Phase(n) ist;
einen Gehalt an Lysin, der höher als die Gesamtmenge an Lysin der ersten flüssigen Phase und der zweiten flüssigen Phase(n) ist; und
eine Menge an Mykotoxinen, die niedriger als die Gesamtmenge an Mykotoxinen der Proteinquelle, die Prolamin enthält, ist.

7. Verfahren nach Anspruch 6, bei welchem das Tierfutter Folgendes umfasst:

eine Konzentration an Glutaminsäure von höchstens 120 mg/g,
eine Konzentration an Prolin von höchstens 40 mg/g,
eine Konzentration an Lysin von mindestens 7 mg/g und
eine Konzentration an Mykotoxinen von höchstens 400 $\mu$g/kg.

8. Verfahren nach Anspruch 7, bei welchem das Tierfutter Folgendes umfasst:

eine Konzentration an Glutaminsäure von höchstens 90 mg/g und/oder
eine Konzentration an Lysin von mindestens 16 mg/g Lysin.

9. Verfahren nach einem der vorstehenden Ansprüche, bei welchem die Proteinquelle, die Prolamin enthält, Maisglutenmehl (CGM) und/oder Brautreber (BSG) und/oder Weizenstärke-Nebenprodukte ist/sind.

10. Verfahren zum Herstellen eines Tierfutters aus einer Proteinquelle, die Prolamin enthält, umfassend die folgenden Schritte:
Waschen der Proteinquelle, die Prolamin enthält, mit einem ersten organischen Lösungsmittel, um eine erste feste Phase und eine erste flüssige Phase zu erhalten, **dadurch gekennzeichnet, dass** das Verfahren ferner Folgendes umfasst:
Entfernen von Prolamin durch Waschen der ersten festen Phase mit einem zweiten organischen Lösungsmittel, um eine zweite feste Phase und eine zweite flüssige Phase zu erhalten, bis die zweite feste Phase als das Tierfutter erhalten wird, wobei die flüssigen Phasen zusammen Folgendes umfassen:

mindestens 120 mg/g Glutaminsäure,
mindestens 40 mg/g Prolin,
höchstens 7 mg/g Lysin und
mindestens 400 $\mu$g/kg Mykotoxine.

11. Verfahren nach Anspruch 10, bei welchem

der Schritt des Waschens der Proteinquelle, die Prolamin enthält, mit dem ersten organischen Lösungsmittel durchgeführt wird, bis der Gehalt an Mykotoxinen in der ersten festen Phase weniger als 600 $\mu$g/kg beträgt, insbesondere umfasst das Tierfutter höchstens 15000 $\mu$g/kg Trockensubstanz von Mykotoxinen, einschließlich 12000 µg/kg Trockensubstanz von Deoxynivalenol und 3000 µg/kg Trockensubstanz von Zearalenon,.

12. Verfahren nach Anspruch 10 oder 11, bei welchem

der Schritt des Entfernens von Prolamin durch Waschen der ersten festen Phase mit einem zweiten organischen Lösungsmittel mindestens mehr als zwei aufeinanderfolgende Waschungen umfasst, bis der Gehalt an Prolamin weniger als 60 % der anfänglichen Prolaminmenge beträgt, insbesondere bis das Tierfutter Folgendes umfasst:

450 mg/g Trockensubstanz von Proteinen, einschließlich
120 mg/g Glutaminsäure,
40 mg/g Prolin und
mindestens 10 mg/g Lysin.

13. Verfahren nach einem der Ansprüche 10 bis 12, bei welchem das erste organische Lösungsmittel mindestens 90 Gew.-% Ethanol umfasst, vorzugsweise mindestens 95 Gew.-% Ethanol, und/oder das erste Waschen während mindestens einer halben Stunde und bei einer Temperatur von mindestens 20 °C durchgeführt wird, vorzugsweise wird das erste Waschen während zwei Stunden bei einer Temperatur von 40 °C durchgeführt.

14. Verfahren nach einem der Ansprüche 10 bis 13, bei welchem das zweite organische Lösungsmittel mindestens 60 Gew.-% Ethanol, vorzugsweise mindestens 70 Gew.-% Ethanol, umfasst und/oder das zweite Waschen während mindestens einer halben Stunde und bei einer Temperatur von mindestens 50 °C durchgeführt wird, vorzugsweise das erste Waschen während einer Stunde bei einer Temperatur von 60 °C durchgeführt wird.

15. Verfahren nach einem der vorstehenden Ansprüche, bei welchem eines von dem Waschen der Proteinquelle, die Prolamin enthält, mit dem ersten organischen Lösungsmittel, dem Waschen der ersten festen Phase mit dem zweiten organischen Lösungsmittel oder einer Kombination davon durchgeführt wird, um den Mykotoxingehalt in dem Tierfutter um mindestens 20 % im Vergleich zu der Anfangsmenge an Mykotoxinen zu verringern.

16. Verfahren nach einem der vorstehenden Ansprüche, bei welchem das zweite organische Lösungsmittel eine Wasser/Ethanol-Lösung ist, die mindestens 60 Gew.-% Ethanol umfasst, und

das Entfernen von Prolamin durch Waschen der ersten festen Phase durchgeführt wird, bis das Tierfutter Folgendes umfasst, mindestens eine Bedingung, vorzugsweise alle der folgenden Bedingungen:

mindestens 450 mg/g Trockensubstanz von Proteinen, einschließlich
höchstens 130 mg/g Glutaminsäure,
höchstens 40 mg/g Prolin,
mindestens 7 mg/g Lysin,
insbesondere wird das Entfernen von Prolamin durch Waschen der ersten festen Phase während mindestens einer halben Stunde und bei einer Temperatur von mindestens 50 °C durchgeführt.

17. Verfahren nach einem der vorstehenden Ansprüche, ferner umfassend das Trocknen des Tierfutters bei Temperaturen zwischen 30 °C und 80 °C, vorzugsweise umfasst das Trocknen einen Vakuumtrocknungsschritt.

18. Verfahren nach einem der vorstehenden Ansprüche, bei welchem das Entfernen von Prolamin durch Waschen der ersten festen Phase mit dem zweiten organischen Lösungsmittel durchgeführt wird, unter Beibehaltung der Dielektrizitätskonstante $\varepsilon r$ zwischen 30 und 42.

19. Tierfutter aus einer Proteinquelle, die Prolamin enthält, **dadurch gekennzeichnet, dass** es Folgendes umfasst:

mindestens 450 mg/g Trockensubstanz von Proteinen, einschließlich
höchstens 130 mg/g Glutaminsäure,
höchstens 40 mg/g Prolin,
mindestens 7 mg/g Lysin; und

höchstens 15000 μg/kg Trockensubstanz von Mykotoxinen.

**20.** Tierfutter nach Anspruch 19, umfassend:

500 mg/g Trockensubstanz von Proteinen, einschließlich
120 mg/g Glutaminsäure,
37 mg/g Prolin, und
mindestens 10 mg/g Lysin, vorzugsweise 15 mg/g Trockensubstanz von Lysin.
vorzugsweise höchstens 10000 μg/kg Trockensubstanz von Mykotoxin.

**21.** Tierfutter nach Anspruch 19 oder 20, umfassend:

höchstens 160 mg/g Glutaminsäure;
höchstens 60 mg/g Prolin; und
mindestens 5 mg/g Lysin.

**Revendications**

**1.** Procédé pour produire un aliment pour animaux à partir d'une source de protéines contenant de la prolamine, comprenant les étapes de :

un premier lavage de la source de protéines contenant de la prolamine avec un premier solvant, **caractérisé en ce que** le procédé comprend en outre au moins un deuxième lavage avec un deuxième solvant, obtenant ainsi une phase solide en tant qu'aliment pour animaux et au moins deux phases liquides,
dans lequel
les au moins deux phases liquides comprennent ensemble :

au moins 22 % d'acide glutamique initial ;
au moins 22 % de proline initiale ;
au plus 60 % de lysine initiale ; et
au moins 20 % de mycotoxines initiales.

**2.** Procédé selon la revendication 1, dans lequel les au moins deux phases liquides comprennent ensemble :

de 22 % à 70 % d'acide glutamique initial ;
de 22 % à 75 % de proline initiale ;
de 10 % à 60 % de lysine initiale ; et
de 20 % à 90 % de mycotoxines initiales, si la concentration initiale de mycotoxines est au moins supérieure à 200 μg/kg.

**3.** Procédé selon la revendication 1 ou 2, dans lequel les au moins deux phases liquides comprennent ensemble :

au moins 90 mg/g, de préférence au moins 140 mg/g d'acide glutamique ;
au moins 30 mg/g de proline, et
au moins 20 % de la quantité initiale de mycotoxine, mais
au plus 16 mg/g, de préférence au plus 8 mg/g de lysine.

**4.** Procédé pour produire un aliment pour animaux à partir d'une source de protéines contenant de la prolamine, comprenant les étapes de :

laver la source de protéines contenant de la prolamine avec un premier solvant organique pour obtenir une première phase solide et une première phase liquide, **caractérisé en ce que** le procédé comprend en outre éliminer la prolamine par lavage de la première phase solide avec un deuxième solvant organique pour obtenir une deuxième phase solide et au moins une deuxième phase liquide ;
la deuxième phase solide étant obtenue en tant qu'aliment pour animaux, dans lequel l'aliment pour animaux comprend :

de l'acide glutamique à une concentration par comparaison à la source de protéines contenant de la prolamine diminuée d'au moins 22 %,

de la proline à une concentration par comparaison à la source de protéines contenant de la prolamine diminuée d'au moins 22 %,

des mycotoxines à une concentration par comparaison à la source de protéines contenant de la prolamine diminuée d'au moins 20 %, et

de la lysine à une concentration par comparaison à la source de protéines contenant de la prolamine augmentée d'au moins 40 %.

5. Procédé selon la revendication 4, dans lequel les au moins deux phases liquides comprennent ensemble :

au moins 150 mg/g d'acide glutamique ;
au moins 65 mg/g de proline, et
au moins 30 % de la quantité initiale de mycotoxine, mais
au plus 7 mg/g de lysine.

6. Procédé pour produire un aliment pour animaux à partir d'une source de protéines contenant de la prolamine, comprenant les étapes de :
laver la source de protéines contenant de la prolamine avec un premier solvant organique pour obtenir une première phase solide et une première phase liquide, **caractérisé en ce que** le procédé comprend en outre éliminer la prolamine par lavage de la première phase solide avec un deuxième solvant organique pour obtenir une deuxième phase solide et une deuxième phase liquide, jusqu'à ce que la deuxième phase solide soit obtenue en tant qu'aliment pour animaux, dans lequel l'aliment pour animaux comprend :

une teneur en acide glutamique inférieure à la quantité totale d'acide glutamique de la première phase liquide et de la ou des deuxièmes phases liquides ;
une teneur en proline inférieure à la quantité totale de proline de la première phase liquide et de la ou des deuxièmes phases liquides ;
une teneur en lysine supérieure à la quantité totale de lysine de la première phase liquide et de la ou des deuxièmes phases liquides ; et
une quantité de mycotoxines inférieure à la quantité totale de mycotoxines de la source de protéines contenant de la prolamine.

7. Procédé selon la revendication 6, dans lequel l'aliment pour animaux comprend :

une concentration d'acide glutamique d'au plus 120 mg/g,
une concentration de proline d'au plus 40 mg/g,
une concentration de lysine d'au moins 7 mg/g, et
une concentration de mycotoxines d'au plus 400 μg/kg.

8. Procédé selon la revendication 7, dans lequel l'aliment pour animaux comprend :

une concentration d'acide glutamique d'au plus 90 mg/g ; et/ou
une concentration de lysine d'au moins 16 mg/g de lysine.

9. Procédé selon l'une quelconque des revendications ci-dessus, dans lequel la source de protéines contenant de la prolamine est de la semoule de gluten de maïs (CGM) et/ou des drêches de brasserie (BSG) et/ou des produits secondaires d'amidon de blé.

10. Procédé pour produire un aliment pour animaux à partir d'une source de protéines contenant de la prolamine, comprenant les étapes de :
laver la source de protéines contenant de la prolamine avec un premier solvant organique pour obtenir une première phase solide et une première phase liquide, **caractérisé en ce que** le procédé comprend en outre éliminer la prolamine par lavage de la première phase solide avec un deuxième solvant organique pour obtenir une deuxième phase solide et une deuxième phase liquide, jusqu'à ce que la deuxième phase solide soit obtenue en tant qu'aliment pour animaux, dans lequel les phases liquides comprennent ensemble :

au moins 120 mg/g d'acide glutamique,

au moins 40 mg/g de proline,
au plus 7 mg/g de lysine, et
au moins 400 µg/kg de mycotoxines.

**11.** Procédé selon la revendication 10, dans lequel

l'étape de lavage de la source de protéines contenant de la prolamine avec le premier solvant organique est effectuée jusqu'à ce que la teneur en mycotoxines soit inférieure à 600 µg/kg dans la première phase solide, en particulier l'aliment pour animaux comprend au plus 15000 µg/kg de matière sèche de mycotoxines, y compris 12000 µg/kg de matière sèche de désoxynivalénol et 3000 µg/kg de matière sèche de zéaralénone.

**12.** Procédé selon la revendication 10 ou 11, dans lequel

l'étape d'élimination de prolamine par lavage de la première phase solide avec un deuxième solvant organique comprend au moins plus de deux lavages successifs
jusqu'à ce que la teneur en prolamine soit inférieure à 60 % de la quantité initiale de prolamine,
en particulier jusqu'à ce que l'aliment pour animaux comprenne :

450 mg/g de matière sèche de protéines, y compris
120 mg/g d'acide glutamique,
40 mg/g de proline, et
au moins 10 mg/g de lysine.

**13.** Procédé selon l'une quelconque des revendications 10 à 12, dans lequel le

premier solvant organique comprend au moins 90 % en poids d'éthanol, de préférence au moins 95 % en poids d'éthanol, et/ou
le premier lavage est effectué pendant au moins une demi-heure et à une température d'au moins 20 °C, de préférence le premier lavage est effectué pendant deux heures à une température de 40 °C.

**14.** Procédé selon l'une quelconque des revendications 10 à 13, dans lequel le

deuxième solvant organique comprend au moins 60 % en poids d'éthanol, de préférence au moins 70 % en poids d'éthanol, et/ou
le deuxième lavage est effectué pendant au moins une demi-heure et à une température d'au moins 50 °C, de préférence le premier lavage est effectué pendant une heure à une température de 60 °C.

**15.** Procédé selon l'une quelconque des revendications précédentes, dans lequel l'un parmi le lavage de la source de protéines contenant de la prolamine avec le premier solvant organique, le lavage de la première phase solide avec le deuxième solvant organique, ou une combinaison de ceux-ci, est effectué de manière à réduire la teneur en mycotoxines dans l'aliment pour animaux d'au moins 20 % par rapport à la quantité initiale de mycotoxines.

**16.** Procédé selon l'une quelconque des revendications précédentes, dans lequel le deuxième solvant organique est une solution eau/éthanol comprenant au moins 60 % en poids d'éthanol, et

l'élimination de prolamine par lavage de la première phase solide est effectuée jusqu'à ce que l'aliment pour animaux comprenne,
au moins une condition, de préférence toutes les conditions ci-dessous :

au moins 450 mg/g de matière sèche de protéines, incluant
au plus 130 mg/g d'acide glutamique,
au plus 40 mg/g de proline,
au moins 7 mg/g de lysine,
en particulier l'élimination de prolamine par lavage de la première phase solide est effectuée pendant au moins une demi-heure et à une température d'au moins 50 °C.

**17.** Procédé selon l'une quelconque des revendications ci-dessus, comprenant en outre sécher l'aliment pour animaux à des températures comprises entre 30 °C et 80 °C, de préférence le séchage comprend une étape de séchage sous vide.

**18.** Procédé selon l'une quelconque des revendications ci-dessus, dans lequel l'élimination de prolamine par lavage de la première phase solide avec le deuxième solvant organique est effectuée en maintenant la constante diélectrique $\varepsilon r$ comprise entre 30 et 42.

**19.** Aliment pour animaux à partir d'une source de protéines contenant de la prolamine, **caractérisé en ce qu'**il comprend :

au moins 450 mg/g de matière sèche de protéines, incluant
au plus 130 mg/g d'acide glutamique,
au plus 40 mg/g de proline,
au moins 7 mg/g de lysine ; et
au plus 15000 $\mu$g/kg de matière sèche de mycotoxines.

**20.** Aliment pour animaux selon la revendication 19, comprenant :

500 mg/g de matière sèche de protéines, incluant
120 mg/g d'acide glutamique,
37 mg/g de proline, et
au moins 10 mg/g de lysine, de préférence 15 mg/g de matière sèche de lysine. de préférence au plus 10000 $\mu$g/kg de matière sèche de mycotoxine.

**21.** Aliment pour animaux selon la revendication 19 ou 20, comprenant :

au plus 160 mg/g d'acide glutamique ;
au plus 60 mg/g de proline ; et
au moins 5 mg/g de lysine.

START

Washing the protein source
containing prolamin

Separating first solid phase from the
first liquid phase

Washing the first solid phase

Separating second solid phase from
the second liquid phase

Animal Feed

END

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- LU 504450
- SU 639511
- SU 639511 A1

### Non-patent literature cited in the description

- **LARKINS et al.** Modification of maize-seed-protein quality. *The American Journal of Clinical Nutrition*, August 1993, vol. 58 (2), 264S-269S, https://doi.org/10.1093/ajcn/58.2.264S
- **MILLER**. *Protein nutrition requirements of farmed livestock and dietary supply*, 28 April 2023, https://www.fao.org/3/y5019e/y5019e06.htm
- **TORREMORELL**. Biosecurity of Animals. *MSD Veterinary Manual*, February 2021
- **TSIAGBE et al.** Efficacy of Cysteine in Replacing Methionine in the Immune Responses of Broiler Chick. *Poultry Science*, 1987, vol. 66 (7), 1138-1146, https://doi.org/10.3382/ps.0661138
- **KONASHI et al.** Effects of dietary essential amino acid deficiencies on immunological variables in broiler chickens. *Br J Nutr.*, April 2000, vol. 83 (4), 449-56
- **CAMP MONTORO et al.** *High levels of standardized ileal digestible amino acids improve feed efficiency in slow-growing pigs at late grower-finisher stage*
- **H.H. STEIN et al.** Definition of apparent, true, and standardized ileal digestibility of amino acids in pigs. *Livestock Science*, 2007, vol. 109 (1-3), 282-285, https://doi.org/10.1016/j.livsci.2007.01.019
- **VAN SOEST et al.** Nutritional Ecology of the Ruminant. Cornell University Press, 1994
- **OPSTVEDT et al.** Heat-induced changes in sulfhydryl groups and disulfide bonds in fish protein and their effect on protein and amino acid digestibility in rainbow trout (Salmo gairdneri). *Journal of Agricultural and Food Chemistry*, July 1984, vol. 32 (4), 929-935
- **GULATI et al.** Heating Reduces Proso Millet Protein Digestibility via Formation of Hydrophobic Aggregates''.. *J Agric Food Chem.*, 23 February 2017, vol. 65 (9), 1952-1959

- **M. HOFFMANN** ; **LKV SACHSEN**. *Die praktische Anwendung der Proteinbewertung für Wiederkäuer in der Rationsgestaltung für Milchrinder*, 2011, https://www.bing.com/ck/a?!&&p=f61ff9a-be184cc0fJmltdHM9MTcxNjc2ODAwMCZpZ3VpZD0wMGVhMzJjMS0wOTY4LTZkN GYtMzQ4OC0yNjQ2MDhiYTZjNDAmaW5za WQ9NTIx-NA&ptn=3&ver=2&hsh=3&fclid=00ea32c1-0968-6d4f-3488-264608ba6c40&psq=Praktische+Anwendung+Proteinbewertung%3b+2011&u
- **BRYAN DDSL** ; **CLASSEN HL**. Vitro Methods of Assessing Protein Quality for Poultry. *Animals*, 2020, vol. 10 (4), 551, https://doi.org/10.3390/ani10040551
- *American Journal of Physiology*, 1905, vol. 13, 35-44
- **HOLDING et al.** Recent advances in the study of prolamin storage protein organization and function. *Frontiers in Plant Science, Plant Evolution and Development*, June 2014, vol. 5, https://doi.org/10.3389/fpls.2014.00276
- **GULATI et al.** *Journal of Agricultural and Food Chemistry*, 2017, vol. 65 (9), 1952-195
- **STREIT E et al.** Current Situation of Mycotoxin Contamination and Co-occurrence in Animal Feed-Focus on Europe. *Toxins.*, 2012, vol. 4 (10), 788-809, https://doi.org/10.3390/toxins4100788
- **YANG, P et al.** Effect of Steeping with Sulfite Salts and Adjunct Acids on Corn Wet-Milling Yields and Starch Properties. *Cereal Chemistry*, 2005, vol. 82, 420-424, https://doi.org/10.1094/CC-82-0420
- **KENT et al.** Wet Milling: The Basis for Corn Biorefineries. AACC International Press, 2019, 501-535
- *Protein nutrition requirements of farmed livestock and dietary supply*, 28 April 2023, https://www.fao.org/3/y5019e/y5019e06.htm
- **D.D. LOY et al.** *Nutritional Properties and Feeding Value of Corn and Its Coproducts*, https://doi.org/10.1016/B978-0-12-811971-6.00023-1

- **XING, J.** ; **LI, Z** ; **ZHANG, W** ; **WANG, P**. The Composition, Structure, and Functionalities of Prolamins from Highland Barley. *Molecules*, 2023, vol. 28, 5334, https://doi.org/10.3390/molecules28145334